# EUROPEAN PATENT APPLICATION

(11) **EP 3 835 790 A1**
(43) Date of publication of application: **16.06.2021**
(21) Application number: 19848361.2
(22) Date of filing: 09.08.2019
(51) Int. Cl.: G01N 35/00

(54) **ANALYSIS DEVICE**

(30) Priority: 10.08.2018 JP 2018151934
(71) Applicant: Kabushiki Kaisha Mirai Genomics, Yokohama-shi, Kanagawa, 230-0046 (JP)
(72) Inventor: TSUJIMARU Koichiro, Nagaokakyo-shi, Kyoto 617-0824 (JP)
(74) Representative: J A Kemp LLP
(86) International application number: PCT/JP2019/031545
(87) International publication number: WO 2020/032226

(57) **Abstract**

Provided is a new analysis device capable of heating an analysis chip and reducing the size thereof. The analysis device (1) of the present invention includes a set unit (15) for setting an analysis chip, an accommodation chamber to be accommodated in the set unit (15) , a blower fan (19) that blows air to the set analysis chip, a heating unit (20) that heats the air to be blown, a drive unit (16) that rotates the analysis chip, and an analysis unit that analyzes the analysis chip, wherein the accommodation chamber becomes an analysis chamber for the analysis chip when the set unit (15) is stored therein, the analysis portion is disposed in a position where the analysis chip is analyzed when the set portion (15) is accommodated in the accommodation chamber, and in the accommodation chamber, the direction of the air blown by the blower fan (19) and the rotation direction of the analysis chip rotated by the drive unit (16) are opposite to each other, or the direction of the air blown by the blower fan (19) is perpendicular to the rotation direction of the analysis chip rotated by the drive unit (16) and is toward the analysis chip

## Description

### Technical Field

The present invention relates to an analysis device that analyzes genes and the like using an analysis chip, for example.

### Background Art

With the development of genetic engineering, it becomes more common to put a sample in an analysis chip, to set the analysis chip in an analysis device, and to subject the sample in the analysis chip to gene amplification and analysis of the obtained amplification product in the analysis device. In the gene amplification, heating is usually indispensable for annealing a primer to a template, extension from the primer, dissociation of the template and an extended strand, and the like. Therefore, the analysis device is provided with a heating mechanism for heating the analysis chip. As the heating mechanism, for example, a method using a blower fan and a heating means is known. That is, a mechanism for heating the analysis chip by setting the analysis chip in the analysis chamber of the analysis device, blowing air by the blower fan, and heating the air to be blown by the heating means (for example, Patent Document 1).

### Prior art references

### Patent Documents

Patent Document 1:JP 4281877 B1

### Summary of Invention

### Object to be Achieved by the Invention

However, the present inventors have found that a mechanism such as that of the aforementioned analysis device has a problem that temperature unevenness occurs in the analysis chip and the analysis accuracy is reduced.

Therefore, an object of the present invention is to provide an analysis device with an improved analysis accuracy.

### Means for Achieving the Object

In order to achieve the above object, the analysis device of the present invention is characterized in that it includes
a set unit for setting an analysis chip,
an accommodation chamber for accommodating the set unit,
a blower fan for blowing air to the analysis chip set in the set unit,
a heating unit that heats the air to be blown by the blower fan, a drive unit that rotates the analysis chip set in the set unit inside the accommodation chamber, and
an analysis unit for analyzing the analysis chip set in the set unit,
wherein
the accommodation chamber, with the set unit accommodated, becomes an analysis chamber for the analysis chip set in the set unit, the analysis unit, while the set unit is accommodated in the accommodation chamber, is arranged at a position where the analysis chip set in the set unit is analyzed, and
in the accommodation chamber,
the direction of air flow by the blower fan and the rotation direction of the analysis chip rotated by the drive unit are opposite to each other, or
the direction of air flow by the blower fan is perpendicular to the rotation direction of the analysis chip by the drive unit and toward the analysis chip.

### Effects of the Invention

According to the analysis device of the present invention, the temperature unevenness of the analysis chip is suppressed by controlling the air flow by the blower fan and the rotation direction of the analysis chip as described above, and as a result, the analysis accuracy can be improved.

### Brief Description of Drawings

[FIG. 1] FIG. 1 (A) and (B) are perspective views showing the analysis device of the first embodiment.
[FIG. 2] FIG. 2 is a top view showing an analysis chip to be set in the analysis chip of the first embodiment.
[FIG. 3] FIG. 3 is a plan view showing an outline of the accommodation chamber according to the first embodiment.
[FIG. 4] FIG. 4 is a schematic view showing another example of the set unit in the first embodiment.
[FIG. 5] FIG. 5 is a cross-sectional view of a set unit of the analysis device of the second embodiment.

### Mode for Carrying out the Invention

In the analysis device of the present invention, the air heated by the heating unit is blown to the analysis chip set in the set unit by the blower fan. The present inventors have found that, at this time, if the flow direction of the air is the same as the rotation direction of the analysis chip rotated by the drive unit, for example, the temperature of the air cannot be accurately controlled and the temperature of the air becomes uneven to cause the temperature unevenness in the analysis chip, and as a result, the reaction in the analysis chip becomes unstable. To that problem, the present inventors have achieved the present invention for avoiding the problem by designing the air flow direction opposite to the rotation direction of the analysis chip, or by designing the air flow direction perpendicular to the rotation direction of the analysis chip and toward the analysis chip. Specifically, according to the present invention, for example, when the air flow direction is opposite to the rotation direction of the analysis chip, the heated air is agitated, so that the temperature of the analysis chip can be kept constant. Further, according to the present invention, for example, by making the air flow direction perpendicular to the rotation direction of the analysis chip and toward the analysis chip, heated air can be applied to the entire surface of the surface parallel to the rotation direction of the analysis chip, and thus the temperature of the analysis chip can be kept constant. Further, by setting the air flow direction to the perpendicular direction, for example, the influence on the rotation speed of the analysis chip can be further suppressed.

In the analysis device of the present invention, for example, the analysis chip set in the set unit has a plurality of regions to be analyzed at positions radial from the center in the plane direction.

The analysis device of the present invention further includes, for example, a light irradiation unit that irradiates light. Further, in the analysis device of the present invention, for example, the analysis unit includes a light detection unit for detecting light.

In the analysis device of the present invention, for example, in a state where the set unit is accommodated in the accommodation chamber, the analysis chip is irradiated with light from the center position of the analysis chip set in the set unit, and the light from the analysis chip is detected at the outer periphery of the analysis chip.

In the analysis device of the present invention, for example, the set unit has a circular base portion and a wall portion that protrudes upward from the outer periphery of the base portion, the light detection unit is arranged on the inner wall of the wall portion of the set unit, and in a state where the accommodation chamber accommodates the set unit, the light irradiation unit is arranged at the center position of the base portion in the set unit.

In the analysis device of the present invention, for example, the analysis unit includes a plurality of the light detection units, and the plurality of light detection units are arranged along the circumferential direction on the inner wall of the wall portion in the set unit.

In the analysis device of the present invention, for example, the accommodation chamber has an opening through which the set unit can be taken in and out.

The analysis device of the present invention further includes, for example, a temperature measuring unit for measuring the temperature of the accommodation chamber and a heating control unit for controlling heating by the heating unit, and the heating control unit controls the heating by the heating unit based on the temperature measured in the temperature measuring unit.

The analysis device of the present invention is, for example, for gene analysis.

Hereinafter, an example of the analysis device of the present invention will be described with reference to the drawings. It should be noted that these are examples, and the present invention is not limited to the following embodiments.

### (Embodiment 1)

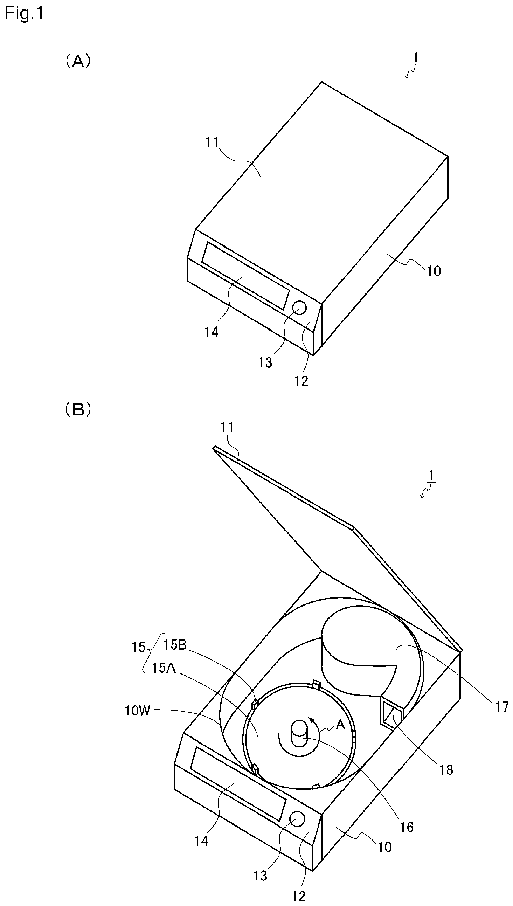

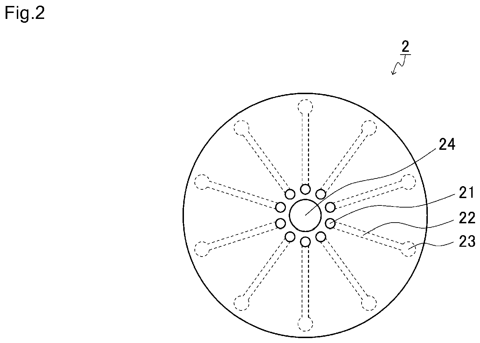

The present embodiment is an example of a mode in which the air flow direction is controlled in a direction opposite to the rotation direction of the analysis chip in the analysis device of the present invention. The analysis device of this embodiment will be described with reference to FIG. 1 and FIG. 2. FIGS.1(A) and (B) are perspective views showing an outline of the analysis device 1 of the present embodiment, and FIG. 2 is a top view showing an outline of the analysis chip 2 to be set in the analysis device 1.

The analysis device 1 has a main body 10, a lid portion 11, and an operation unit 12. FIG. 1 (A) is the analysis device 1 in a state where the lid portion 11 is closed, and FIG. 1 (B) is an analysis device 1 in a state where the lid portion 11 is open. The main body 10 is a recess that opens upward, and has, in the center thereof, a set unit 15 for setting an analysis chip 2, a drive unit 16 for rotating the analysis chip 2, and a blower unit 17 having a blower port 18. One end of the lid portion 11 is connected to one end of the main body 10 such that it can be opened and closed. When the other end of the lid portion 11 is raised upward to open the lid portion 11, the inside of the main body 10 is exposed, and when the other end of the lid portion 11 is lowered downward to close the lid portion 11, the inside of the main body 10 is blocked from the outside. In the analysis device 1, the space surrounded by the recess of the main body 10 and the lid portion 11 with the lid portion 11 closed is the accommodation chamber, and when the analysis device 1 is used, the accommodation chamber becomes analysis chamber. Inside the accommodation chamber, a set unit 15 is arranged near the center of the main body 10, a blower unit 17 is arranged adjacent to the set unit 15, and an analysis unit (not shown) that analyzes the analysis chip 2 arranged in the set unit 15 is arranged. The set unit 15 has a base portion 15A on which the analysis chip 2 is arranged and a wall portion (convex portion) 15B protruding upward from the outer circumference of the base portion 15A, and the drive unit 16 is arranged in the center of the set unit 15. The wall portion 15B can fix the position of the analysis chip 2 set in the set unit 15, for example. Further, the analysis chip 2 set in the set unit 15 is rotated by the drive unit 16 in the arrow A direction (counterclockwise), for example. The rotation direction of the analysis chip 2 rotated by the drive unit 16 is not limited to the above, as long as the rotation direction is the direction opposite to the air flow direction by the blower fan 19 described later. For example, it may be the direction opposite to the arrow A direction (clockwise). The operation unit 12 is arranged in front of the main body 10 and provided with a power button 13, a display unit 14, and the like.

The drive unit 16 has, for example, a support unit and a motor. The support unit rotatably supports the analysis chip 2 set in the set unit 15, for example, and is connected to the motor, and can rotate the analysis chip 2 by driving the support unit by the motor. Using the drive unit 16, for example, the analysis chip 2 set in the set unit 15 can be rotated inside the accommodation chamber with the analysis chip 2 set and the lid portion 11 closed. By rotating the analysis chip 2 in the analysis device 1 in this manner, the centrifugal force is generated in the analysis chip 2. By utilizing this centrifugal force, the reaction solution in the analysis chip 2 can be mixed or moved in the analysis chip 2, for example.

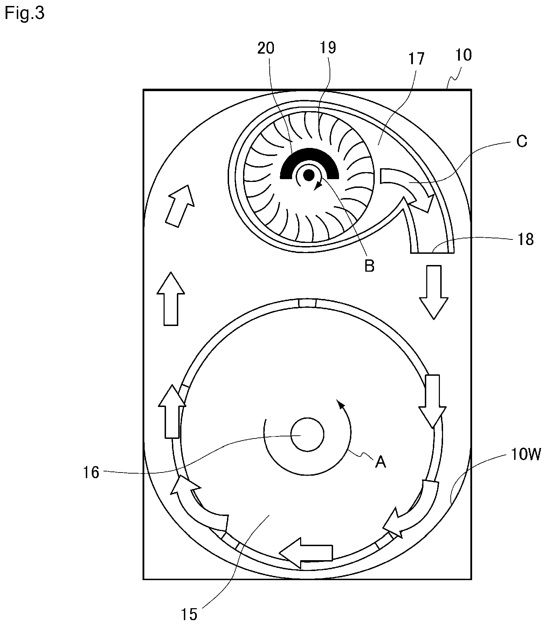

Next, the blower unit 17 will be described with reference to FIG. 3. FIG. 3 is a plan view showing an outline of the accommodation chamber in the analysis device 1. Since an internal structure of the blower unit 17 is shown in In FIG. 3, the upper surface covering the internal structure is omitted. The blower unit 17 is a compartment unit in which a blower fan 19 that generates an air flow by rotation and a heating unit 20 that heats the air to be blown by the blower fan 19 are accommodated, which has a blower port 18 for discharging the air that is blown by the blower fan 19 and heated in the heating unit 20.

The blower fan 19 is not particularly limited, and for example, a centrifugal fan as shown in FIG. 1(B) can be exemplified. The blower fan 19 is not limited to this, and any commonly used fan that is driven by a motor, such as an axial fan, can be used. Further, the heating unit 20 only needs to be able to heat the air blown by the blower fan 19, and for example, any commonly used heater for heating air can be used.

When the blower fan 19 is rotated in the direction of arrow B (clockwise) in the blower unit 17, an air flow is generated toward the outside of the centrifugal direction of the blower fan 19, and the air is heated by the heating unit 20. Then, the heated air travels in the direction of the white arrow C and is discharged from the air outlet 18 into the accommodation chamber. Since the air discharged from the blower unit 17 has a directionality in this manner, for example, depending on the directionality, the air travels through the accommodation chamber and runs along the inner wall of the accommodation chamber to circulate in the accommodation chamber. As shown in FIG. 1 and FIG.3, for example, in the accommodation chamber, the corner portion 10W of the inner wall may be a curved surface. When the corner portion 10W of the accommodation chamber is a curved surface, for example, air moves along the curved surface, so that circulation along the white arrow C direction is performed more efficiently. In the present invention, the air flow direction may be the direction opposite to the rotation direction of the analysis chip 2, and the control of the air flow direction can be conducted by a general method such as, for example, adjusting the position of the blower fan or using an air duct.

As shown in FIG. 3, the direction of rotation of the analysis chip 2 is the direction of arrow A, and the direction of air flow by the blower fan 19 is the direction of the white arrow C, similar to the direction of rotation of the blower fan (direction of arrow B), and the two are in opposite directions. Therefore, the air heated by the heating unit 20 is agitated in the accommodation chamber, and as a result, the temperature of the analysis chip 2 can be made constant.

The analysis device 1 is used, for example, as follows. First, the lid portion 11 of the analysis device 1 is opened automatically or manually, and the analysis chip 2 is set in the set unit 15 of the main body 10. Next, the lid portion 11 is closed automatically or manually. In the analysis device 1, the analysis chip 2 is accommodated by closing the lid portion 11 with respect to the recess of the main body 10, and the accommodation chamber becomes the analysis chamber of the analysis chip 2. Then, in the accommodation chamber inside the analysis device 1, the drive unit 16 rotates the analysis chip 2 and drives the heating unit 20 to heat air, driving the blower fan 19 to blow the heated air into the accommodation chamber. By the blowing of the heated air, the analysis chip 2 set in the set unit 15 is heated, a reaction is proceeded in the analysis chip 2, and the analysis chip 2 is analyzed by the analysis unit.

The analysis device 1 may further have a temperature measuring unit that measures the temperature of the accommodation chamber (analysis chamber) and a heating control unit that controls heating by the heating unit 20. The temperature measuring unit measures the temperature of the accommodation chamber, and the heating control unit controls the heating by the heating unit 20 so that the temperature of the accommodation chamber becomes a predetermined temperature (set temperature) , by which, for example, more accurate analysis becomes possible. The temperature measuring unit is, for example, a temperature sensor. In the analysis device 1, for example, the temperature sensor is connected to the heating control unit, and the heating control unit is connected to the heating unit 20. The predetermined temperature can be appropriately determined, for example, depending on the reaction of the sample to be analyzed, and can be maintained at, for example, a preset set temperature, by the temperature measuring unit, the heating control unit, and the heating unit 20.

The analysis chip 2 set in the set unit 15 is, for example, a chip for analyzing a sample. In FIG. 2, the analysis chip 2 is a circular main body, and has a through hole 24 in the center into which the drive unit 16 of the analysis device 1 is inserted. The analysis chip 2 has a plurality of parts to be analyzed radially from the center thereof. Each part to be analyzed has an introduction port 21 for introducing a sample, a flow path 22, and a region to be analyzed 23, and the introduction port 21 and the region to be analyzed 23 communicate with each other via the flow path 22. The analysis chip 2 is not limited to the example of FIG. 2, for example.

The analysis chip has, for example, one or more plurality of regions to be analyzed. The region to be analyzed is, for example, a region in which a sample to be analyzed, a reaction solution of the sample, and the like are arranged. The region to be analyzed may be a region that is directly analyzed or a region that is indirectly analyzed, by the analysis unit of the analysis device 1. Specifically, the region to be analyzed is a region where various signals that should be analyzed by the analysis unit of the analysis device 1 are generated. However, the analysis unit of the analysis device 1 may detect, for example, the generated signal at a position of the region to be analyzed, or may detect the generated signal at a position different from the region to be analyzed. That is, the region to be analyzed may be, for example, a region that is subjected to an analysis per se or not a region that is subjected to an analysis. For example, when light or the like is generated in the region to be analyzed and the analysis unit of the analysis device 1 detects the light, the light in the region to be analyzed may be detected or the light may be detected at the position different from the region to be analyzed.

It is preferable that the analysis chip has a plurality of regions to be analyzed at positions radial from the center thereof in the plane direction, for example. When the analysis chip is rotated as described above, for example, the center in the plane direction is the center of rotation. The plurality of regions to be analyzed may be arranged on the same circumference or concentrically, for example. The analysis chip further has, for example, an introduction port and a flow path, and the introduction port communicates with each of the regions to be analyzed via the flow path. The introduction port is an introduction port for introducing a liquid such as a sample, a reagent, or a mixture thereof into the analysis chip, for example. When the liquid is introduced from the introduction port, the liquid passes through the flow path and is introduced into the region to be analyzed. At this time, for example, as described above, by rotating the analysis chip to generate centrifugal force, it is possible to promote the passage of the liquid through the flow path. The introduction port and the flow path may have a 1: 1 relationship, or a plurality of the regions to be analyzed may communicate with one introduction port by a plurality of branched flow paths, for example.

The shape of the analysis chip is not particularly limited, and examples thereof include a circular shape.

For example, a mixed solution of a sample and a reagent to be reacted by heating may be introduced into the region to be analyzed of the analysis chip, or the sample and the reagent may be mixed in the region to be analyzed by introducing the sample while the reagent is arranged in advance. When a gene is amplified and the obtained amplification product is detected in the analysis chip, for example, an amplification reagent such as a primer, a probe, an intercalator, an enzyme such as a polymerase and the like can be used as the reagent.

The type of the analysis unit in the analysis device 1 is not particularly limited, and can be appropriately determined, for example, depending on the analysis method for the heating reaction solution in the analysis chip. When the heating reaction solution is analyzed by light, the analysis unit includes, for example, a light detection unit that detects light. The light detection unit is, for example, a light receiving unit that receives light, and examples thereof include an optical sensor and the like. Examples of the light detection unit include a photodiode and the like.

The analysis device 1 may perform analysis, for example, by exciting the heating reaction solution in the analysis chip by irradiating light, and receiving light emission generated from the heating reaction solution. In this case, the analysis device 1 has, for example, a light irradiation unit that irradiates light, and the analysis unit is, for example, the light receiving unit. The light irradiation unit is not particularly limited, and examples thereof include an LED and the like, and examples of the light receiving unit include a photodiode and the like as described above.

In the analysis device 1, the positions of the light irradiation unit and the analysis unit are not particularly limited. In an embodiment of the analysis device 1, the analysis chip is irradiated with light from the center position (for example, the center of rotation) of the analysis chip set in the set unit 15 in the accommodation chamber with the lid portion 11 closed, and light from the analysis chip is detected (for example, light is received) on the outer periphery of the analysis chip.

Therefore, in the analysis device of the present invention, the light irradiation unit and the analysis unit may be arranged inside the accommodation chamber with the lid portion 11 closed, for example.

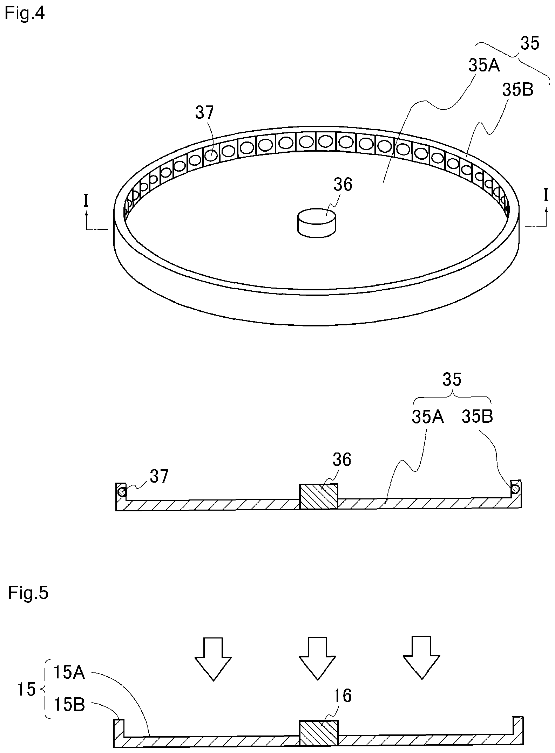

An example of the light irradiation unit and the analysis unit is shown in FIG. 4. FIG. 4 is a schematic view showing another example of the set unit in the analysis device 1, in which the upper figure is a perspective view and the lower figure is a sectional view of the perspective view seen from the I-I direction. As shown in FIG. 4, the set unit 35 is a circular concave body having a circular base portion 35A and a wall portion (annular convex portion) 35B protruding upward from the outer circumference of the base portion 35A. The set unit 35 can fix the analysis chip when the analysis chip is arranged on the base portion 35A in the concave interior by the wall portion (convex portion) 35B. The set unit 35 has a light irradiation unit 36 at the center of the base portion 35A for irradiating the analysis chip to be set with light. In this case, the light irradiation unit 36 may be arranged around the drive unit 16 in FIG.1, for example. The light irradiation unit 36 is, for example, an LED or the like as described above. Further, in the set unit 35, a plurality of light detection units 37 are arranged along the circumferential direction on the inner wall of the wall portion 35B. As described above, the light detection unit 37 is a light receiving unit that receives light from the analysis chip, for example, and examples thereof include a photodiode and the like. The analysis chip set in the set unit 35 has, for example, a through hole through which the light irradiation unit 36 penetrates in the center thereof, and the region to be analyzed is arranged radially from the center thereof.

By arranging the light irradiation unit 36 at the center of the base portion 35A, the set unit 35 can irradiate the analysis chip arranged on the base portion 35A with light from the center side thereof. As described above, since the analysis chip has the region to be analyzed radially, it is possible to efficiently irradiate each region to be analyzed by irradiating light from the center side. Further, at the time of light irradiation, as described above, by rotating the analysis chip, the analysis chip can be irradiated with light from the center of rotation of the analysis chip.

Further, the set unit 35 has an annular wall portion 35B on the outer periphery of the base portion 35A, and a plurality of light detection units 37 on the inner wall of the wall portion 35B. Therefore, the analysis chip is irradiated with light from the center, and the light generated from the analysis chip can be detected (received) by the light detection unit 37 on the inner wall of the wall portion 35B. As described above, since the analysis chip has a plurality of the regions to be analyzed radially, light can be detected with respect to the regions to be analyzed by the plurality of light detection unit 37 arranged in the circumferential direction on the inner wall of the outer peripheral wall portion 35B respectively.

The set unit 35 is not limited to the embodiment shown in FIG. 4, and may have the light irradiation unit on the inner wall of the wall portion 35B and the light detection unit at the center of the base portion 35A, for example.

In the analysis device 1, the display unit 14 can display, for example, the temperature, the analysis result, and the like.

FIG. 1 shows an embodiment of the analysis device of the present invention, in which the lid portion is opened and closed to set the analysis chip in the set unit. However, that is simply an example, and the present invention is not limited thereto. The analysis device of the present invention may have, for example, a main body and a tray, and the tray may be automatically or manually inserted and removed from the opening on the front surface of the main body. In this case, the tray has the set unit. In this embodiment, for example, inside the main body, the space in which the tray is accommodated is the accommodation chamber, and when the analysis device is used, the accommodation chamber becomes the analysis chamber.

In this embodiment, first, the tray accommodated in the accommodation chamber inside the analysis device is pulled out from the opening, and the analysis chip is set in the set unit of the tray. The tray is then automatically or manually inserted into the accommodation chamber through the opening. When the tray in which the analysis chip is set is accommodated in the accommodation chamber of the analysis device, the accommodation chamber becomes the analysis chamber of the analysis chip. Then, in the same manner, the heated air is blown, and the analysis unit analyzes the analysis chip. The position of the analysis unit is not particularly limited, and may be any position as long as the analysis unit can analyze the analysis chip in a state where the set unit in which the analysis chip is set is accommodated in the accommodation chamber as described above.

### (Embodiment 2)

This embodiment is an example of embodiments in which the air flow direction is controlled in a direction perpendicular to the rotation direction of the analysis chip rotated by the drive unit and toward the analysis chip, in the analysis device of the present invention. In this embodiment, the description of the first embodiment can be employed except that the control of the air flow direction is different.

The air flow direction in this embodiment will be described with reference to FIG. 5. FIG. 5 is a cross-sectional view of the set unit 15 which is the same as that of FIG. 1 (B), and specifically, is a cross-sectional view of the drive unit 16 along the axial direction. In the present embodiment, the air heated by the heating unit is blown by the blower fan in the arrow direction, that is, from the upper direction to the lower direction. In this manner, since the air flow direction by the blower fan is perpendicular to the rotation direction of the analysis chip rotated by the drive unit 16 and is the direction toward the analysis chip, heated air can be applied to the entire surface of the surface parallel to the rotation direction of the analysis chip. The temperature of the analysis chip thus can be kept constant. Further, by setting the air flow direction to the perpendicular direction, for example, the influence on the rotation speed of the analysis chip can be further suppressed.

In the analysis device of the present embodiment, the portion where the blower fan and the heating unit are arranged is not particularly limited, as long as the air can be heated and the flow of the heated air can be controlled as described above. As a specific example, for example, in FIG. 1(B), a blower fan that blows air downward and a heating unit may be arranged on the inner surface of the lid portion 11, that is, the upper surface of the accommodation chamber.

Although the present invention has been described above with reference to the embodiments, the present invention is not limited to the above-described embodiments and examples. Various changes that can be understood by those skilled in the art can be made to the structure and details of the present invention within the scope of the present invention.

This application claims priority to Japanese Patent Application No. 2018-151934 filed on August 10, 2018, the entire content of which is incorporated herein by reference.

### Industrial Applicability of the Invention

As described above, according to the present invention, by controlling the air flow by the blower fan and the rotation direction of the analysis chip as described above, the temperature unevenness of the analysis chip is suppressed, and as a result, the accuracy of the analysis can be improved. Therefore, the present invention is extremely useful in the field of analysis of genes and the like.

- 1: Analysis device
- 10: Main body
- 11: Lid portion
- 12: Operation unit
- 13: Power button
- 14: Display unit
- 15, 35: Set unit
- 16: Drive unit
- 17: Blower unit
- 18: Blower port
- 19: Blower fan
- 20: Heating unit
- 36: Light irradiation unit
- 37: Light detection unit
- 2: Analysis chip
- 21: Introduction port
- 22: Flow path
- 23: Region to be analyzed
- 24: Through hole

## Claims

1. An analysis device, which is **characterized in** comprising
a set unit for setting an analysis chip,
an accommodation chamber for accommodating the set unit,
a blower fan for blowing air to the analysis chip set in the set unit,
a heating unit that heats the air to be blown by the blower fan, a drive unit that rotates the analysis chip set in the set unit inside the accommodation chamber, and
an analysis unit for analyzing the analysis chip set in the set unit,
wherein
the accommodation chamber, with the set unit accommodated, becomes an analysis chamber for the analysis chip set in the set unit, the analysis unit, while the set unit is accommodated in the accommodation chamber, is arranged at a position where the analysis chip set in the set unit is analyzed, and
in the accommodation chamber,
the direction of air flow by the blower fan and the rotation direction of the analysis chip rotated by the drive unit are opposite to each other, or
the direction of air flow by the blower fan is perpendicular to the rotation direction of the analysis chip rotated by the drive unit and toward the analysis chip.

2. The analysis device according to claim 1, wherein the analysis chip set in the set unit has a plurality of regions to be analyzed at positions radial from its center in a plane direction.

3. The analysis device according to claim 1 or 2, further comprising a light irradiation unit that irradiates light, wherein
the analysis unit includes a light detection unit that detects light.

4. The analysis device according to claim 3,
wherein the set unit has a circular base portion and a wall portion that protrudes upward from the outer periphery of the base portion, the light detection unit is arranged on inner wall of the wall portion of the set unit, and
in a state where the accommodation chamber accommodates the set unit, the light irradiation unit is arranged at the center position of the base portion in the set unit.

5. The analysis device according to claim 4,
wherein the analysis unit includes a plurality of the light detection units, and the plurality of light detection units are arranged along a circumferential direction on an inner wall of the wall portion in the set unit.

6. The analysis device according to any one of claims 1 to 5, wherein the accommodation chamber has an opening through which the set unit can be taken in and out.

7. The analysis device according to any one of claims 1 to 6, further comprising a temperature measuring unit for measuring the temperature of the accommodation chamber and a heating control unit for controlling heating by the heating unit,
wherein the heating control unit controls the heating by the heating unit based on the temperature measured in the temperature measuring unit.

8. The analysis device according to any one of claims 1 to 7, which is for gene analysis.
